# EUROPEAN PATENT APPLICATION

(11) **EP 4 088 587 A1**
(43) Date of publication of application: **16.11.2022**
(21) Application number: 22172923.9
(22) Date of filing: 12.05.2022
(51) Int. Cl.: A23K 40/10, A23K 40/20, A23K 50/80, A23N 17/00

(54) **FISH FEED PRODUCTION PLANT**

(30) Priority: 12.05.2021 IT 202100012218
(71) Applicant: T.T.C. S.r.l.s., 25126 Brescia (IT)
(72) Inventor: CANTONATI, Alessandro, I-25126 BRESCIA (IT)
(74) Representative: Chimini, Francesco

(57) **Abstract**

The invention relates to a fish feed production plant (1) comprising:
- a storage assembly (2) comprising a plurality of storage units (21, 22, 23, 24), each adapted to contain a dry raw material;
- a first mixing machine (3) adapted to mix the dry raw materials to obtain a mixture;
- a liquid dosing assembly (4) comprising an oil dosing member (41) and a water dosing member (42);
- a second mixing machine (5) adapted to mix water, oil and the mixture to obtain a dough;
- a forming machine (6) adapted to receive the dough and reduce the size thereof to obtain a moist feed with a specific moisture content;
- a drying machine (7) adapted to reduce the moisture content of the moist feed to obtain the fish feed. [Fig. 1]

## Description

The present invention relates to a fish feed production plant, such as salmonid fish and trout. Furthermore, the present invention relates to fish feed produced with said plant.

The invention relates to the field of fish feed production used in fish farms.

In the background art, multiple recipes for fish feed are known, diversified according to the age of the fish, the features of the farm and the temperature of the farm water.

In fact, typically, the composition of the feed, understood as the set of ingredients, varies according to the type of fish for which it is intended (juvenile fish, fish to be fattened, spawning fish, finishers).

For example, crumbled feed and micropellets are typically intended for juvenile fish, medium-sized feed is used for pre-fattening fish, while large, cubed feed (typically up to 6/8 mm) is fed to fish during the various finishing stages and for fish intended for spawning.

In addition, high energy-feed is used for farms with constant water temperature and high availability of dissolved oxygen in the water. In contrast, medium/low-energy feed is typically used in plants where the water is subject to significant temperature variations and where the oxygenation does not reach optimal levels.

Lastly, the choice is varied between floating feeds for shallow tanks and sinking feeds for very deep tanks.

In the feeds of the background art there is a need of recipes ad hoc calibrated, i.e., recipes that have different ingredients as a function of the type of fish for which they are used (juvenile fish, fish to be fattened, spawning fish, finishers), leading to a clear disadvantage for the feed producer.

In addition, the feed contains synthetic substances, including additives and dyes, in order to prolong the life thereof and make it more palatable.

Furthermore, hemoglobin derived from chicken and/or pigs is used to optimize the feed. However, these substances cannot be consumed by all types of fish consumers, for example by Muslim consumers.

In addition, the use of non-specific feed and the possible use of non-natural substances cause damage to the physical and psychological health of the fish, as well as a negative response of the immune system and digestive system thereof. Such aspects typically lead to a lower growth rate, with obvious disadvantages for the farmer.

It is the object of the present invention to effectively solve the problems of the background art mentioned above.

One of the objects of the present invention is to produce a feed, which is closer to the natural diet for fish and made according to a single flexible recipe, suitable for various types of fish.

It is another object of the present invention to obtain a recipe which respects the natural physiology of fish, which generates rapid unforced growth.

It is a further object of the present invention to obtain a feed which does not base the effectiveness thereof on synthetic products, hemoglobin or porcine blood flours.

The feed according to the present invention has the object of meeting the needs of fish, minimizing the formula cost, in compliance with natural farming practices, sustainable both for the environment and for the consumer.

Such objects are achieved with the feed production plant according to claim 1, with the production method according to claim 10 and with the feed according to claim 12. The dependent claims describe preferred or advantageous embodiments.

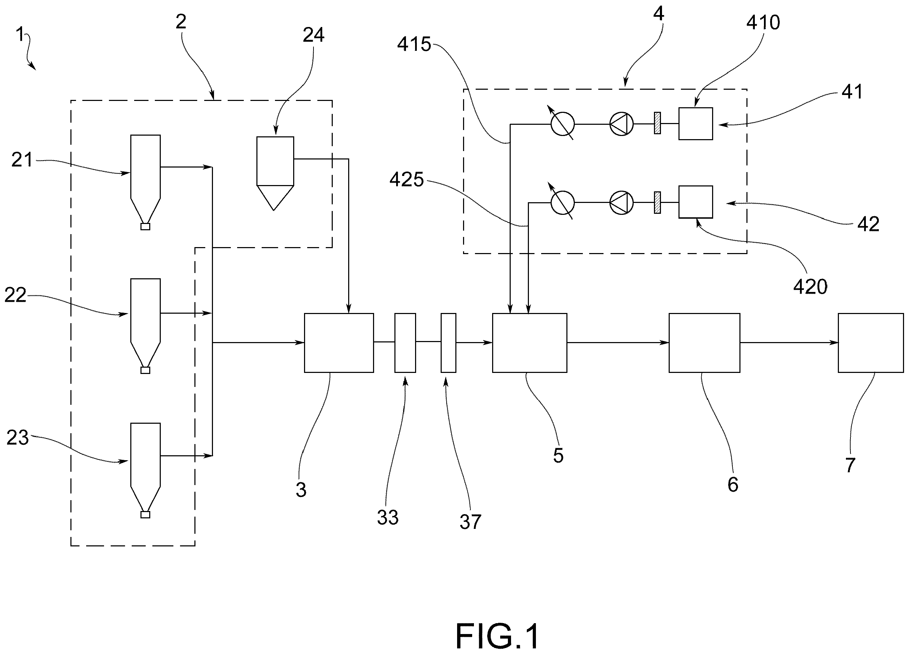

Further features and advantages of the invention will appear from the following description of preferred examples of embodiments thereof, given by way of nonlimiting example, with reference to figure 1, which shows a block diagram of a feed production plant according to the present invention, in accordance with a preferred embodiment.

The feed according to the present invention is intended for fish farming, calibrated for the type of fish, such as trout, char, fario trout.

In other words, the feed according to the present invention is accurately calibrated for feeding fish so as to maximize animal welfare, thereby reducing the number of animals that can become sick and die.

The feed according to the present invention comprises a mixture of fish flour and fish oil, added in specific amounts.

According to a preferred embodiment, the feed comprises fish oil in a percentage between 8 and 20 percent.

According to a preferred embodiment, the feed comprises a core, preferably of the protein type.

In the course of the discussion, "core feed material" or simply "core" is intended as a fish feed ingredient introduced in order to support the introduction of subsequent supplements, e.g., vitamin supplements, of the feed.

According to an embodiment, the percentage of supplements is 20 percent.

According to a preferred embodiment, the feed comprises water.

In an embodiment, the amount of water is less than 7 percent. In a different embodiment, such a percentage of water is 5 percent.

During the discussion, the above referred percentages of water refer to the water added during the feed production step. In other words, said percentages refer to the water mixed with the other ingredients in order to obtain the moist feed.

According to a preferred embodiment, the feed comprises soy flour.

Preferably, the percentage of soy flour is 10 percent, while the fish flour is 50 percent.

In an alternative embodiment, the fish flour is added in equal parts to shrimp flour. In other words, the fish flour and shrimp flour account for 25% of the total in equal parts.

It is also the object of the present invention the production plant of the feed described above, hereinafter referred to as "plant".

In accordance with the present invention, the plant is adapted to carry out the activities necessary for obtaining the feed in the final form and composition thereof.

With reference to the accompanying drawings, the plant as a whole is indicated with the number 1.

In accordance with the present invention, the plant 1 comprises:
- a storage assembly 2, adapted to store the dry raw materials, such as soy flour, fish flour, shrimp flour and the feed core;
- a first mixing machine 3 comprising a mixing chamber, in which the dry raw materials are introduced and mixed to obtain a mixture of dry raw materials;
- a liquid dosing assembly 4 comprising an oil dosing member 41, containing fish oil, and a water dosing member 42, containing water;
   - a second mixing machine 5 comprising a second mixing chamber, fluidically connected to the liquid dosing assembly 4, in which water, oil and the mixture of dry raw materials are introduced and mixed, so as to obtain a dough;
   - a forming machine 6 that receives the dough and reduces the size thereof to obtain a moist feed with a moisture content;
   - a drying machine 7 that reduces the moisture content of the moist feed to obtain the fish feed.

In the present discussion, "moist feed" means the semi-finished product exiting the forming machine 6 having the same chemical composition as the final feed, except for the moisture content and the chemical-physical properties connected thereto.

In accordance with the invention, the storage assembly 2 comprises a plurality of hollow storage units 21, 22, 23, 24, each adapted to contain a different raw material.

In accordance with an embodiment, the first hollow storage unit 21 contains soy flour, and a second hollow storage unit 22 contains fish flour.

According to an embodiment, the storage assembly 2 comprises a third storage unit 23, containing shrimp flour.

According to an embodiment, the storage assembly 2 comprises a fourth hollow storage unit 24 containing core raw material.

In accordance with an embodiment, the storage units 21, 22, 23, 24 are silos, for example fiberglass silos.

The storage capacity of the storage units 21, 22, 23, 24 is preferably between 4 and 8 tons, preferably it is about 6 tons.

According to an advantageous aspect, the storage capacity of the storage units 21, 22, 23, 24 is sufficient to contain the dry raw materials in sufficient quantities for numerous production cycles at maximum productivity, for example, in quantities greater than 20 feed production cycles.

In an embodiment, the storage units 21, 22, 23, 24 respectively comprise an anti-vent lid, adapted to seal the environment in which the dry raw material is contained.

In accordance with an embodiment, the storage units 21, 22, 23, 24 are adapted to contain poorly flowing products.

According to an embodiment, the storage units 21, 22, 23, 24 respectively comprise a motor-vibrator, preferably of the three-phase type, adapted to facilitate the unloading of the dry raw materials.

In accordance with an advantageous aspect, the storage units 21, 22, 23, 24 respectively comprise a loading tube, adapted to be connected to a tanker arranged for the pressurized loading of the dry raw materials.

According to an advantageous aspect, the storage units 21, 22, 23, 24 respectively comprise a man-height porthole which allows an operator of the plant to see the amount of raw material stored therein.

According to an advantageous aspect, the fourth storage unit 24 comprises a movable frame 240, adapted to support a bag containing the core raw material during the emptying thereof.

In an embodiment, the storage units 21, 22, 23, 24 described above respectively comprise a conveyor device, for example a tubular screw conveyor, adapted to dose the escape of dry raw materials.

In accordance with an embodiment, the first mixing machine 3 is a horizontal mixer, preferably made of stainless steel, adapted to mix the dry raw materials in the mixing chamber comprised therein.

In other words, the first mixing machine 3 is adapted to receive the dry raw materials from each storage unit 21, 22, 23, 24, and mix them homogeneously to obtain the mixture of dry raw materials.

According to an embodiment, the mixing chamber has a payload capacity between 400 and 600 liters, preferably about 500 liters.

According to an embodiment, the mixing chamber is adapted to mix a batch of dry raw materials of mass between 100 and 400 kilograms, preferably equal to about 250 kilograms.

According to an advantageous aspect, the first mixing machine 3 comprises load cells, which are activatable to weigh and dose the mixture of dry raw materials, in an adjustable manner according to the needs.

In accordance with an embodiment, downstream of the first mixing machine 3 a receiving hopper 33 is placed that receives the mixture of dry raw materials to release it as a function of needs.

For example, in an embodiment, the receiving hopper 33 has a useful capacity of 500 liters and is adapted to contain a batch of mass between 100 and 400 kilograms, preferably equal to about 250 kilograms.

According to an embodiment, downstream of the first mixing machine 3, preferably of the receiving hopper, a bucket elevator 37 is placed, used for the transport of the mixture of dry raw materials, for example increasing the height thereof with respect to a ground level.

According to an embodiment, the receiving hopper 33 comprises a conveyor-extractor which feeds the bucket elevator 37.

In an embodiment, said bucket elevator 37 has an elevation of about 5 meters and is made of sheet metal, preferably painted.

According to the invention, the liquid dosing assembly 4 comprises an oil dosing member 41, adapted to contain fish oil, and comprises a water dosing member 42, adapted to contain water.

In accordance with an embodiment, the dosing members 41, 42 comprise at least one oil tank 410 and one water tank 420, respectively, arranged for the storage of water and oil.

Furthermore, in an embodiment, the dosing members 41, 42 respectively comprise a fluidic oil circuit 415 and a fluidic water circuit 425 which fluidically connect the respective tanks 410, 420 to the second mixing machine 5.

In accordance with an embodiment, the water dosing member 42 draws water from an aqueduct, preferably by means of a hydraulic pump, for example a submerged pump.

In an embodiment, the water dosing member 42 comprises an electric steam generator which evaporates the water and introduce steam produced in the fluidic water circuit 425.

In an embodiment, the fluidic conduits 415, 425 comprise adjustment members adapted to adjust the flow of liquid (water or steam or fish oil) flowing in said fluidic conduits 415, 425, and comprise filtration devices, placed directly downstream of the respective tanks 410, 420.

According to the present invention, the second mixing machine 5 is fluidically connected to the liquid dosing assembly 4.

In accordance with an embodiment, the second mixing machine 5 is fluidically connected to the liquid dosing assembly 4 via the fluidic conduits 415, 425.

According to the present invention, the second mixing machine 5 combines the mixture of dry raw materials with the fish oil and with the water in the second mixing chamber, obtaining a dough.

In accordance with an embodiment, the second mixing machine 5 is placed downstream of the first mixing machine 3, preferably downstream of the receiving hopper 33, preferably downstream of the bucket elevator 37.

In an embodiment, the second mixing machine 5 is a continuous intensive mixer, preferably of the MAK type.

Specifically, in an embodiment, the second mixing machine 5 comprises fluidic injectors adapted to dispense fish oil and water in significant quantities into the second mixing chamber to obtain the moist dough.

According to an advantageous aspect, the second mixing machine 5 comprises a rotating shaft and comprises a plurality of blades integral in rotation with the rotating shaft, interchangeable as a function of the type of dough to be produced.

In accordance with the present invention, the forming machine 6 is adapted to receive the dough exiting the second mixing machine 5 to obtain the moist feed.

In accordance with an embodiment, the forming machine 6 is a briquetting machine, also called a pelleting machine, i.e., it provides the moist feed in the form of pellets as output.

According to an alternative embodiment, the forming machine 6 provides the moist feed in the form of flakes or balls.

According to the present invention, the drying machine 7 receives the moist feed exiting the forming machine 6 and acts thereon to remove part of the moisture.

In other words, the product exiting the drying machine 7 is the feed considered "finished", i.e., provided with the final chemical-physical features, and in particular with the desired degree of moisture.

According to an embodiment, the drying machine 7 performs a cooling of the moist dough.

In an embodiment, the drying machine 7 is a vibrating screen, preferably comprising an electric motor-vibrator.

According to an embodiment, the screen has a planar rectangular shape, for example with smaller side 600 mm and greater side 2000 mm.

According to an embodiment, the drying machine 7 comprises a perforated sheet in which 2 mm holes are obtained.

In an embodiment, the plant 1 is at least partially automated. Specifically, the automation monitors the individual storage units through dedicated electronic units, for example PLCs provided with ad hoc software.

The automation thus formed allows to trace a certain batch of feed in the production and post-production step, in order to digitally arrange the features thereof.

Preferably, the hardware architecture is contained in painted sheet metal cabinets and comprises PLC and Computer devices provided with dedicated DeviceNET software for remote assistance and traceability and tracking software.

In other words, the software is dedicated to production management and to the traceability process.

Preferably, the term traceability refers specifically to EC Regulation 178/2002, which establishes general principles and requirements.

Such dedicated software is also called STET (Track & Trace Software) and is adapted to automatically manage the percentages of material to be inserted in the various batches of feed.

Preferably, all the machines that determine an accumulation or a displacement of material are positioned on load cells, adapted to measure the weight of the material.

To track the product, firstly, a code of the materials received from a supplier is stored through an electronic device, for example provided with a handle to be grasped and directed.

Through the software installed on a computer, an operator determines the substances to be inserted and the quantities thereof, for example in weight or in percentage.

Subsequently, the degree of moisture to be inserted in the pellet is determined according to the state of growth of the fish. Subsequently, the mixing plan is determined, i.e., the feed production procedure, which is identified by a code, for example a bar code or QR code.

Said code contains the list of ingredients, the origin thereof, the production data and the date of administration.

In other words, the product traceability requires the unique identification of each element in the system, the collection and storage of data related to the passages through the nodes of the supply chain and the possibility of tracing significant information on production processes.

Preferably, STET supply chain traceability management software is adapted to identify the products to be traced and the related origin supply chain.

In other words, the information flows are analyzed and software modules are designed so as to identify and register all the actors (node) in the supply chain and manage, for each node, the significant information related to the production processes.

According to an embodiment, the operating operation of the plant 1 comprises the choice of the recipe for the feed production, for example performed by an operator, in which the percentages of raw materials to be introduced into the system are recalled in order to obtain a homogeneous mixing of the product.

Downstream of the mixing, the material is unloaded into a receiving hopper. Subsequently, a bucket elevator picks up the material and gradually arranges it in the second mixing machine 5, preferably of the continuous mixer type.

The second mixing machine 5 then receives a specific percentage of oil and moisture. In an embodiment, the oil is dosed through a dedicated pump and volumetric meter.

Preferably, these activities are controlled in an automated manner.

The product thus obtained is placed in the briquetting machine for the production of moist feed.

Subsequently, a vibrating screen adjusts the desired degree of moisture in the feed as a function of the specific recipe, thus obtaining a feed having features which make it adapted to be dispersed in water.

A fish feed production method by means of the plant 1 is further an object of the invention.

According to the invention, the method comprising the steps of:
a) including an amount of core raw material and other dry raw materials, such as fish flour and/or soy flour, in specific proportions;
b) inserting and mixing the dry raw materials in the first mixing chamber to obtain a mixture of raw materials;
c) inserting the mixture in the second mixing chamber;
d) inserting and mixing an amount of water and fish oil in the second mixing chamber to obtain a dough;
e) inserting the dough in the forming machine (6) to obtain a moist feed;
f) inserting the moist feed in the drying machine (7) to obtain a finished feed.

According to an embodiment, the method includes in step a) the presence of shrimp flour in equal parts with respect to fish flour, so that it is equal to 25% of the total.

According to an alternative embodiment, the method includes in step d) inserting an amount of water of less than 7 percent, preferably less than 5 percent.

Fish feed produced according to the production method, i.e., by means of the plant 1, is an object of the present invention as well.

Innovatively, the feed according to the present invention and the plant for the production of said feed largely fulfill the intended objects, overcoming the typical problems of the known art.

Advantageously, the design and construction of the production plant are chosen appropriately, so as to obtain the desired moist feed.

Advantageously, the feed is a safe product, which fully meets the needs of fish, of the environment, of the farming and of the consumer.

Advantageously, in order to obtain the pink color of the meat, the presence of chemicals of non-natural origin is obviated. In fact, advantageously, the addition of shrimp flour allows to obtain the pink color of trout meat in a natural manner.

Advantageously, the need to add chicken or porcine hemoglobin to the feed is obviated. Therefore, advantageously, the fish fed with the feed is adapted to be consumed by all types of consumers.

Advantageously, the plant allows avoiding the formation of lumps in the dough.

Advantageously, the plant allows to trace and track the production features of the feed for the farmer, thus ensuring quality standards to the final consumer of the fish.

Advantageously, it is always possible to know the quantities present in the production steps in real time.

It is apparent that, in order to meet contingent needs, those skilled in the art could make changes to the above-described invention, all contained in the scope of protection as defined by the following claims.

## Claims

1. A fish feed production plant (1), comprising:
- a storage assembly (2) comprising a plurality of storage units (21, 22, 23, 24), each adapted to contain a dry raw material;
- a first mixing machine (3) comprising a first mixing chamber, adapted to receive and mix the dry raw materials to obtain a mixture of dry raw materials;
- a liquid dosing assembly (4) comprising an oil dosing member (41), adapted to contain fish oil, and a water dosing member (42), adapted to contain water;
- a second mixing machine (5) comprising a second mixing chamber, fluidically connected to the liquid dosing assembly (4), adapted to receive and mix water, oil and the mixture of dry raw materials to obtain a dough;
- a forming machine (6) adapted to receive the dough from the second mixing machine (5) and to reduce the size of said dough to obtain a moist feed provided with a specific moisture content;
- a drying machine (7) adapted to reduce the moisture content of the moist feed to obtain the fish feed.

2. A plant (1) according to any one of claims 1 and 2, wherein each storage unit (21, 22, 23, 24) respectively comprises a vibrating motor, preferably of the three-phase type, adapted to facilitate the unloading of the dry raw materials.

3. A plant (1) according to any one of the preceding claims, wherein the first mixing machine (3) comprises load cells, which are activatable to weigh and dose the mixture of dry raw materials, in an adjustable manner as a function of needs.

4. A plant (1) according to any one of the preceding claims, comprising a bucket elevator (37), positioned downstream of the first mixing machine (3), preferably having a maximum elevation of 5 meters from the ground.

5. A plant (1) according to any one of the preceding claims, wherein the water dosing member (42) comprises a water tank (420) used for storing water and comprises a fluidic water circuit (425) in which water flows, fluidically connected between the water tank (420) and the second mixing machine (5).

6. A plant (1) according to claim 5, wherein the water dosing member (42) comprises an electric steam generator fluidically connected with the fluidic water circuit (425) for the evaporation of the water flowing therein.

7. A plant (1) according to any one of the preceding claims, wherein the second mixing machine (5) is a continuous intensive mixer, preferably of the MAK type.

8. A plant (1) according to any one of the preceding claims, wherein the second mixing machine (5) comprises a rotating shaft and comprises a plurality of blades integral in rotation with the rotating shaft, interchangeable as a function of the type of dough to be produced.

9. A plant (1) according to any one of the preceding claims, wherein the drying machine (7) is a vibrating screen, preferably comprising a vibrating motor, adapted to dry and cool the wet feed.

10. A method for producing fish feed by means of a plant (1) according to any one of the preceding claims, comprising the steps of:
a) including an amount of core raw material and other dry raw materials, such as fish flour and/or soy flour, in specific proportions;
b) inserting and mixing the dry raw materials in the first mixing chamber to obtain a mixture of raw materials;
c) inserting the mixture in the second mixing chamber;
d) inserting and mixing an amount of water and fish oil in the second mixing chamber to obtain a dough;
e) inserting the dough in the forming machine (6) to obtain a moist feed;
f) inserting the moist feed in the drying machine (7) to obtain a finished feed.

11. A method for producing fish feed according to claim 10, wherein step a) includes the presence of shrimp flour in equal parts to the fish flour, so that it is equal to 25 percent of the total.

12. A feed produced by means of the plant (1), according to any one of claims 1 to 9.
